(19) Europäisches Patentamt
European Patent Office
Office européen des brevets

(11) **EP 2 251 657 B1**

(12) **EUROPÄISCHE PATENTSCHRIFT**

(45) Veröffentlichungstag und Bekanntmachung des Hinweises auf die Patenterteilung:
**28.11.2012 Patentblatt 2012/48**

(51) Int Cl.:
***G01G 21/28*** *(2006.01)*

(21) Anmeldenummer: **09160140.1**

(22) Anmeldetag: **13.05.2009**

(54) **Windschutzvorrichtung für ein Laborgerät**

Wind protection device for a laboratory device

Dispositif de protection contre le vent pour un appareil de laboratoire

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(43) Veröffentlichungstag der Anmeldung:
**17.11.2010 Patentblatt 2010/46**

(73) Patentinhaber: **Mettler-Toledo AG**
**8606 Greifensee (CH)**

(72) Erfinder:
• **Lüchinger, Paul**
**8610, Uster (CH)**
• **Ehrbar, Sandra**
**8605, Gutenswil (CH)**

(56) Entgegenhaltungen:
**EP-A- 1 195 584     EP-A- 1 195 585**
**EP-A- 1 355 032     EP-A- 1 617 191**
**FR-A- 2 672 482**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Windschutzvorrichtung für ein Laborgerät, die einen eine Waagschale umgebenden Wägeraum umschliesst und welche Windschutzvorrichtung eine Rückwand, eine Frontwand, zwei Seitenwände und eine Abdeckung beinhaltet.

Laborgeräte dieser Art dienen beispielsweise als Analysewaagen in vielen Bereichen der Industrie, insbesondere in Laboratorien von Forschungs- und Entwicklungsabteilungen, aber auch in der Produktion, beispielsweise in der Qualitätskontrolle.

In der US 4 700 793 A ist eine Analysewaage mit einem Wägeraum ausführlich beschrieben. Analysewaagen sind Waagen mit sehr hoher Auflösung. Demzufolge können bereits kleinste auf das Wägegut oder auf den Lastaufnehmer einwirkende äussere Einflüsse das Wägeresultat verfälschen. Die äusseren Einflüsse sind selten stabil und dies kann dazu führen, dass das genaue Gewicht des Wägeguts nicht ermittelt werden kann. Zum Schutz des Wägesystems vor Umgebungseinflüssen wird deshalb ein Wägeraum mit einer sogenannten Windschutzvorrichtung umschlossen.

Wie in der US 4 700 793 A oder EP 1 617 191 A1 dargestellt, weist die Windschutzvorrichtung einer Analysewaage meistens zwei schiebbare Seitenwände und gegebenenfalls auch eine schiebbare Abdeckung auf, da die Beschickung mit Wägegut üblicherweise von der Seite auf den Lastaufnehmer erfolgt, gegebenenfalls auch von oben. Die Frontwand ist üblicherweise mit dem Gehäuse der Waage starr verbunden und verleiht der Windschutzvorrichtung durch seine Stützwirkung Stabilität. Eine Windschutzvorrichtung muss eine möglichst geschlossene und stabile Struktur aufweisen, damit Luftbewegungen der Umgebung nicht über Spalten und Öffnungen der Windschutzvorrichtung in den Wägeraum übertragen werden und dadurch im Wägeraum störende Luftbewegungen entstehen.

Damit der Wägeraum und insbesondere die Seitenwände der Wiridschutzvorrichtung besser gereinigt werden können, wird in der US 6 686 545 B2 eine Windschutzvorrichtung vorgeschlagen, deren Frontwand und die Seitenwände mittels einer Schwenkbewegung aus einer formschlüssigen Verankerung gelöst und mittels einer anschliessenden Ziehbewegung von der Waage entfernt werden können. Die Abdeckung ist über eine Linearführung mit dem als Rückwand dienenden Waagengehäuse verbunden und kann horizontal über das Waagengehäuse geschoben werden, wodurch der Windschutz nach oben offen ist. Ferner kann auch die Abdeckung mittels einer Schwenkbewegung von der Linearführung getrennt werden.

Alle vorangehend beschriebenen Waagen weisen eine Windschutzvorrichtung auf, deren Seitenwände an ihrer Oberkante und Unterkante im Gehäuse der Windschutzvorrichtung beziehungsweise der Waage horizontal geführt sind. Diese Auslegung weist den Nachteil auf, dass sich in den unteren Führungen oder Führungsteilen trotz aller konstruktiver Massnahmen Spuren der verwogenen Substanzen ansammeln können. Um Substanzverschleppungen zu vermeiden, müssen die unteren Führungen oder Führungsteile mit grosser Sorgfalt und erheblichem Aufwand periodisch gereinigt werden.

Die Aufgabe der vorliegenden Erfindung ist deshalb, eine Windschutzvorrichtung für ein Laborgerät zu schaffen, deren mindestens eine öffenbare Seitenwand ohne Führungen oder Führungsteile im Bereich ihrer Unterkante auskommt und welche Windschutzvorrichtung in geschlossenem Zustand eine möglichst dichte und stabile Struktur aufweist, damit Luftbewegungen der Umgebung nicht über Spalten und Öffnungen in den Wägeraum übertragen werden.

Diese Aufgabe wird durch eine Windschutzvorrichtung mit den kennzeichnenden Merkmalen des Anspruchs 1 gelöst. Weitere bevorzugte Ausführungsformen der Erfindung sind Bestandteil der abhängigen Ansprüche.

Die erfindungsgemässe Windschutzvorrichtung für ein Laborgerät umschliesst einen eine Waagschale umgebenden Wägeraum. Die Windschutzvorrichtung beinhaltet eine Rückwand, eine Frontwand, zwei Seitenwände, eine Abdeckung und einen durch Endkanten begrenzten Boden. Ferner weist die Windschutzvorrichtung zur Führung mindestens einer, horizontal verschiebbaren Seitenwand mindestens ein mit der Abdeckung verbundenes Führungsmittel und/oder zur Halterung der Frontwand ein mit der Abdeckung verbundenes Halterungsmittel auf, durch welche Führungsmittel und/oder Halterungsmittel die mindestens eine Seitenwand und/oder die Frontwand gegen die Schwerkraft abgestützt ist und ein gegen den Boden gerichtetes Drehmoment aufweist. Dieses Drehmoment wird durch die der Seitenwand und/oder Frontwand zugewandte Endkante abgestützt.

Die vorliegende Erfindung weist enorme Vorteile auf. Dadurch, dass die horizontal verschiebbare Seitenwand ein gegen den Boden gerichtetes Drehmoment aufweist, wird die Seitenwand gegen die Endkante des Bodens gepresst. Durch das Anpressen der Seitenwand an die ihr zugewandte Endkante wird der Bereich zwischen der Seitenwand und der ihr zugewandten Endkante ausreichend abgedichtet. Weder Fertigungstoleranzen der Windschutzteile noch die weiter unten beschriebene vertikale Verschiebbarkeit der Abdeckung mit mindestens einer Wand, können zu klaffenden Spalten und somit zu Lecks in der Windschutzvorrichtung führen. Ferner ist durch die erfindungsgemässe Auslegung der Seitenwandführung die Seitenwand statisch bestimmt gehalten, dies führt zu einer stabilen Struktur des ganzen Windschutzes, da die Seitenwand nicht pendeln kann. Sinngemäss gilt dies natürlich auch für die Frontwand und deren Halterungsmittel.

Zur Führung mindestens einer, horizontal verschiebbaren Seitenwand ist eine erste Führungsschiene und eine, zur ersten Führungsschiene parallel sich erstreckende zweite Führungsschiene an der der Seitenwand zugewandten Seite der Abdeckung angeordnet. Die verschiebbare Seitenwand weist ferner mindestens ein Führungsstück mit zwei Ausnehmungen auf, wobei durch jede Ausnehmung je eine Führungsschiene hindurchgeführt ist. Zudem weist die erste Ausnehmung eine Führungsstelle und die zweite Ausnehmung eine Führungsflanke auf, wobei im Betriebszustand der Windschutzvorrichtung die Führungsstelle im Wesentlichen vertikal ausgerichtet ist und an der ersten Führungsschiene anliegt und die Führungsflanke an der zweiten Führungsschiene aufliegt. Der Neigungswinkel der Führungsflanke zur Vertikalen ist derart gewählt,

- dass die verschiebbare Seitenwand gegen die Schwerkraft abgestützt ist und
- dass die verschiebbare Seitenwand infolge ihres Eigengewichts und im Zusammenwirken mit der Führungsstelle als Schwenk-Loslagerstelle ein gegen den Boden gerichtetes Drehmoment aufweist, welches Drehmoment durch die der Seitenwand zugewandte Endkante abgestützt ist.

Infolge ihres Eigengewichts wird die Seitenwand durch die Führungsflanke, die Endkante und die Schwenk-Loslagerstelle in den Führungsschienen stabil gehalten. Je grösser folglich das Eigengewicht der Seitenwand ist, desto widerstandsfähiger ist die horizontal verschiebbare Seitenwand gegen an ihr angreifende Luftbewegungen aus der Umgebung.

Um die Reibungskräfte für den Öffnungs- oder Schliessvorgang zu minimieren, kann im Führungsstück mindestens eine Führungsrolle angeordnet sein, welche die Führungsflanke und/oder die Führungsstelle beinhaltet.

Weitere Vorteile ergeben sich durch die erfindungsgemässe Auslegung mit zwei Führungsschienen dadurch, dass die mindestens eine Seitenwand lösbar mit der Abdeckung verbunden werden kann. Die beiden Ausnehmungen müssen nämlich nicht hochpräzise Bohrungen sein, welche mit möglichst geringem Spiel ebenso hochpräzise gefertigte Führungsschienen umschliessen. Dem entsprechend können schlitzförmige Ausnehmungen vorhanden sein die die genannte Führungsstelle und Führungsflanke aufweisen, wobei jeweils ein Ende der Ausnehmungen in einer Seitenkante des Führungsstücks endet, so dass die Seitenwand in die Führungsschiene einhängbar ist. Das Einhängen der Seitenwand in die Führungsschienen erfolgt dementsprechend im Wesentlichen in Richtung der Schwerkraft.

Alternativ zur vorangehend beschriebenen Lösung kann das Führungsmittel auch wie nachfolgend beschrieben, ausgestaltet sein.

Eine erste Führungsschiene und eine, sich zur ersten Führungsschiene parallel erstreckende zweite Führungsschiene sind an der, der Seitenwand zugewandten Seite der Abdeckung angeordnet. Die verschiebbare Seitenwand weist mindestens ein Führungsstück auf, welches mindestens eine starr gelagerte erste Führungsrolle und eine, mit einem elastischen Element beaufschlagte, schwenkbar gelagerte zweite Führungsrolle beinhaltet. Die verschiebbare Seitenwand ist an der ersten Führungsschiene durch die erste Führungsrolle gegen die Schwerkraft abgestützt und orthogonal zur Verschieberichtung seitlich geführt. Die verschiebbare Seitenwand ist ferner durch die schwenkbare, zweite Führungsrolle zur zweiten Führungsschiene hin vorgespannt und weist dadurch ein gegen den Boden gerichtetes Drehmoment auf, welches Drehmoment durch die der Seitenwand zugewandte Endkante abgestützt ist.

Wie weiter oben bereits beschrieben, kann auch die Frontwand ein Halterungsmittel mit den erfindungsgemässen Merkmalen aufweisen. An einer der Frontwand zugewandten Abdeckungsendkante der Abdeckung ist an beiden Enden der Abdeckungsendkante je eine Halterung mit je zwei sich parallel zur Abdeckungsendkante erstreckenden Nuten angeordnet. Ferner ist an jeder, der Abdeckungsendkante zugewandten Ecken der Frontwand ein Bolzenstück mit je zwei, sich parallel zur Abdeckungsendkante erstreckenden Bolzen angeordnet. Die erste Nut weist eine Bolzenführungsstelle auf und die zweite Nut weist eine Bolzenführungsflanke auf. Im Betriebszustand der Windschutzvorrichtung ist die Bolzenführungsstelle im Wesentlichen vertikal ausgerichtet und der erste Bolzen liegt an dieser an. Der zweite Bolzen liegt an der Bolzenführungsflanke auf, wobei der Bolzenführungsflankenwinkel der Bolzenführungsflanke zur Vertikalen derart gewählt ist, dass die Frontwand gegen die Schwerkraft abgestützt ist und die Frontwand infolge ihres Eigengewichts und im Zusammenwirken mit der Bolzenführungsstelle als Schwenk- Loslagerstelle ein gegen den Boden gerichtetes Drehmoment aufweist. Dieses Drehmoment ist durch die der Frontwand zugewandte Endkante abgestützt.

Zu Reinigungszwecken kann die mindestens eine Seitenwand und/oder Frontwand lösbar mit der Abdeckung verbunden sein.

Ferner kann mindestens eine Verriegelungsvorrichtung im Führungsstück angeordnet sein, die im Betriebszustand mindestens eine der Führungsschienen teilweise umfasst, so dass das Führungsstück nur bei betätigter Verriegelungsvorrichtung von den Führungsschienen trennbar ist.

Da eine Windschutzvorrichtung möglichst alle in der Umgebung des Laborgeräts vorhandenen Luftströmungen abhalten soll, ist es von Vorteil, wenn eine sich mindestens über die Länge der Endkante erstreckende Dichtungsgleitleiste, Dichtungsbürste oder Dichtungswalze an mindestens einer Endkante des Bodens angeordnet ist. Diese hat die Aufgabe, einen möglichen Spalt zwischen der Endkante des Bodens und der Seitenwand abzudichten und eine die Seitenwand schonende Verschiebung derselben relativ zur Endkante zu ermöglichen. Bei Seitenwänden mit besonders zerstörungsanfälliger Oberfläche, beispielsweise beschichteten Glasscheiben, kann auch eine Dichtungswalze vorhanden sein, welche bei einer vertikalen Verschiebung der Seitenwand abrollt und deren Oberfläche bei einer horizontalen Verschiebung der Seitenwand ausreichende Gleiteigenschaften aufweist. Wenn dies auch nicht ausreicht, können selbstverständlich entlang der Endkante des Bodens auch eine Abstützkugel oder eine Reihe Abstützkugeln an diesem befestigt sein, so dass unabhängig von der Richtung der Verschiebung nie eine Gleitbewegung zwischen den Abstützkugeln und der Seitenwand stattfindet, da sich die Richtung der Drehbewegung der Abstützkugel nach der Bewegung der Seitenwand ausrichtet. Die Zwischenräume zwischen den einzelnen Abstützkugeln oder zwischen deren hervorstehenden Kuppen müssen beispielsweise mit Bürsten- oder Leistenabschnitten soweit ausgefüllt sein, dass kein oder nur noch ein äusserst kleiner Spalt zwischen zwei benachbarten Abstützkugeln und der auf den Abstützkugeln anliegenden Seitenwand vorhanden ist. Lecks in den vertikal sich erstreckenden Kantenbereichen der Windschutzvorrichtung infolge von Winkelfehlern der Frontwand, der Rückwand und der Seitenwände zueinander, können mittels in den vertikalen Randbereichen dieser Wände angeordneter weichelastischer Dichtungslippen oder Bürsten geschlossen werden.

In der Praxis ist ferner bekannt, dass das Volumen des Wägeraums die Präzision einer Waage begrenzen kann. Die Ursache dafür liegt im Wesentlichen darin, dass in einem grossen Wägeraum die eingeschlossene Luft wesentlich stärker auf Umgebungseinflüsse ausserhalb des Windschutzes reagiert, beispielsweise durch Einstrahlung von Wärme und Licht. Ferner sind bei einem grossen Wägeraum im Verhältnis zum eingeschlossenen Volumen weniger Flächen vorhanden, welche die bewegten Luftmassen, beispielsweise nachdem die Seitenwand geschlossen wurde, bremsen. Ein kleines Wägeraum-Volumen hilft somit, dass die Luft im Innern des Wägeraums sehr rasch zur Ruhe kommt. Zudem wird die Luft in einem Wägeraum geringer Höhe nur minimal umgeschichtet und es kann sich innerhalb des Wägeraums rasch ein verhältnismässig stabiles Temperaturprofil über die Wägeraumhöhe ausbilden.

Vorteilhafterweise sind daher die Abdeckung und mindestens eine der beiden Seitenwände und/oder die Frontwand und/oder die Rückwand relativ zum Boden vertikal verschiebbar. Dies wird umso mehr durch die erfindungsgemässe Führung der Seitenwände erleichtert, da keinerlei Führungen im Bereich des Bodens eine derartige vertikale Verschiebung behindern. Die an die Endkanten des Bodens anschliessenden Gehäusewände des Laborgeräts müssen lediglich derart ausgebildet sein, dass die verschiebbaren Wände an diesen vertikal vorbeiführbar sind.

Zur vertikalen und/oder horizontalen Verschiebung kann ferner mindestens ein Antrieb vorhanden sein. Vorzugsweise sind aber ein Antrieb für die vertikale Verschiebung der Abdeckung mit der damit verbundenen Seiten-, Front- und/oder Rückwand und ein weiterer Antrieb zur horizontalen Verschiebung mindestens einer Seitenwand vorhanden. Diese können mit einer Steuervorrichtung verbunden sein, welche von einer Bedienperson über eine Eingabeeinheit bedient werden kann.

Sofern zur vertikalen Verschiebung der Abdeckung beziehungsweise zur Höhenverstellung von Teilen der Windschutzvorrichtung ein Antrieb eingesetzt wird, ist im Laborgerät vorzugsweise eine Abtastvorrichtung vorhanden, mittels welcher Abtastvorrichtung zumindest die Höhe eines auf die Waagschale aufgelegten Zielgefässes erfassbar ist.

In einer möglichen Ausgestaltung kann die Abtastvorrichtung zwei Laserdioden und zwei Fotozellen beinhalten, wobei sich die beiden von den Laserdioden emittierten Strahlen unmittelbar unterhalb des Durchbruchs oder der Austragungsöffnung der Dosiervorrichtung kreuzen.

Die erfindungsgemässe Windschutzvorrichtung kann in Laborgeräten mit verschiedensten Ausprägungen verwendet werden. Das Laborgerät kann beispielsweise eine Waage, ein Dosiergerät eine Pipettier- oder Titriervorrichtung sein.

Die Windschutzvorrichtung und deren Verwendung in einem Laborgerät werden anhand der folgenden Figuren näher beschrieben, wobei gleiche Elemente mit denselben Bezugszeichen versehen sind. Es zeigen:

Figur 1    eine dreidimensionale Darstellung eines Laborgeräts mit einer Dosiervorrichtung und mit einer erfindungsgemässen Windschutzvorrichtung in einer ersten Ausführung, mit deren vertikal verschiebbaren Abdeckung beide Seitenwände, die Frontwand und ein Teil der Rückwand verbunden sind, wobei die dargestellte Lage der Abdeckung dem maximal möglichen Abstand vom Boden entspricht;

Figur 2    das Laborgerät aus Figur 1 mit einer geöffneten Seitenwand, wobei die dargestellte Lage der Abdeckung dem minimal möglichen Abstand vom Boden entspricht;

Figur 3    eine Detailansicht der verschiebbaren Seitenwand sowie eines Teils des Wägeraums, der Abdeckung und des Bodens sowie der Führungsschienen im Schnitt;

Figur 4    eine schematische Darstellung der verschiebbaren Seitenwand aus der Figur 3 mit den an der Seitenwand angreifenden und diese abstützenden Kräften;

Figur 5    eine dreidimensional dargestellte Detailansicht der lösbaren Seitenwandbefestigung;

Figur 6    eine dreidimensional dargestellte Detailansicht der lösbaren Frontwandbefestigung;

Figur 7    eine dreidimensionale Darstellung einer erfindungsgemässen Windschutzvorrichtung mit einem Antrieb für beide Seitenwände und mit zwei Linearführungen für die vertikale Verschiebung der Abdeckung und der Wände;

Figur 8    eine Detailansicht des Führungsstücks und der ersten und zweiten Führungsschiene im Schnitt, wobei das Führungsstück eine starr gelagerte erste Führungsrolle und eine schwenkbar im Führungsstück gelagerte zweite Führungsrolle aufweist.

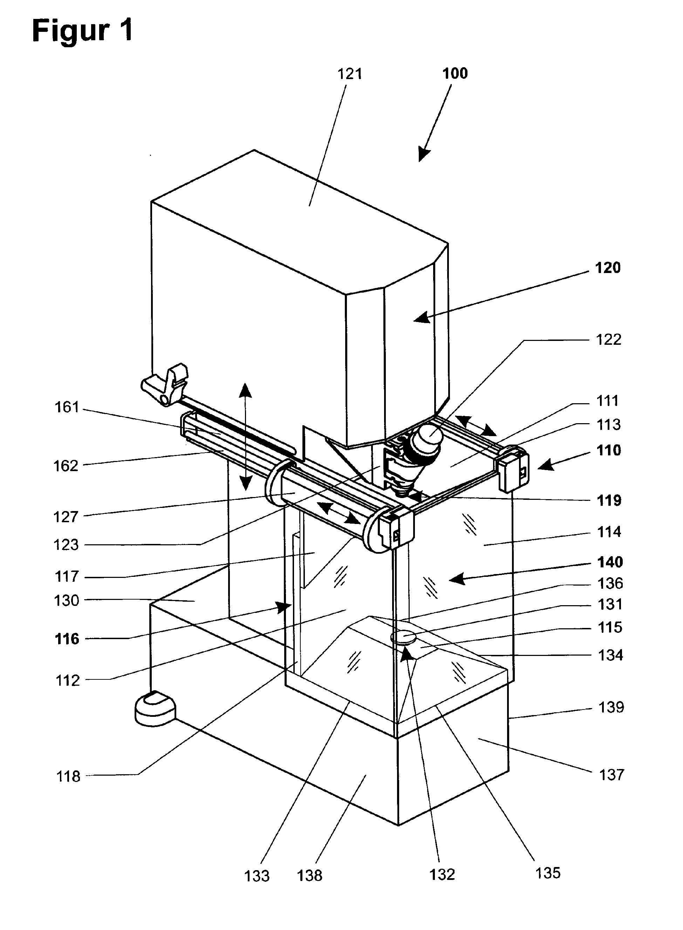

In Figur 1 ist ein Laborgerät 100 mit einer Dosiervorrichtung 120 und mit einer erfindungsgemässen Windschutzvorrichtung 110 in einer ersten Ausführung dargestellt. Die Windschutzvorrichtung 110 umfasst eine Abdeckung 111, einen durch Endkanten 133, 134, 135, 136 begrenzten Boden 115, eine erste Seitenwand 112 und eine zweite Seitenwand 113, eine Frontscheibe 114 und eine geteilte Rückwand 116. Die Windschutzvorrichtung 110 umschliesst einen Wägeraum 140.

Die Windschutzvorrichtung 110 ist geschlossen dargestellt, wobei die Seitenwände 112, 113 und die Frontwand 114 aus transparentem Material gefertigt sind, so dass der von der Windschutzvorrichtung 110 umschlossene Wägeraum 140 von drei Seiten einsehbar ist. Beide Seitenwände 112, 113, sind relativ zur Abdeckung 111 horizontal linear verschiebbar.

Die erste Seitenwand 112 ist mit einem Führungsstück 127 versehen, welches an einer ersten Führungsschiene 161 und an einer, zu dieser parallelen zweiten Führungsschiene 162 linear geführt ist. Beide Führungsschienen 161, 162 sind mit der Abdeckung 111 fest verbunden. Die zweite Seitenwand 113 ist in analoger Weise mit einem Führungsstück versehen, welches an entsprechenden, mit der Abdeckung 111 verbundenen Führungsschienen horizontal geführt ist. Durch die erfindungsgemässe Ausgestaltung der Führungsschienen 161, 162, werden die horizontal verschiebbaren Seitenwände 112, 113 vertikal gehalten und weisen ein gegen den Boden 115 gerichtetes Drehmoment auf, wodurch die gegen die Endkante 133, 134 gerichtete Fläche der jeweiligen Seitenwand 112, 113 stets in Anlage mit der ihr zugewandten Endkante 133, 134 ist. Dadurch wird unabhängig vom Abstand der Abdeckung 111 zum Boden 115 stets ein nahezu leckfreies Schliessen der Windschutzvorrichtung 110 ermöglicht. Ferner ist durch das gegen den Boden gerichtete Drehmoment gewährleistet, dass die Seitenwände 112, 113 durch auf sie einwirkende Windkräfte der Umgebung nicht zu pendeln beginnen. Dies würde im Wägeraum 140 Luftströmungen erzeugen und eine Erfassung eines Wägeresultats verunmöglichen.

Der Boden 115 ist mit einem Sockelgehäuse 130 des Laborgeräts 100 fest verbunden. Im Sockelgehäuse 130 ist eine nicht dargestellte Wägezelle angeordnet, deren Lastaufnahmebereich mittels eines nicht sichtbaren Lastübertragungselements mit einer oberhalb des Bodens 115 und daher im Wägeraum 140 angeordneten Waagschale 131, verbunden ist. Wie dargestellt, fällt der Boden 115 von seiner Mitte ausgehend, jeweils gegen die beiden Seitenwände 112, 113 und die Frontwand 114 ab. Dies schliesst nicht aus, dass sich einzelne Flächen des Bodens 115 auch horizontal erstrecken können, wie dies in der Figur 1 dargestellt ist. Die Mitte des Bodens 115 ist mit einer Durchführung 132 versehenen, damit das wegen der Waagschale 131 nicht einsehbare Lastübertragungselement durch den Boden 115 in den Wägeraum 140 hineingeführt werden kann.

Wie der Boden 115, ist in vergleichbarer Weise auch die Abdeckung 111 pyramidenstumpfartig ausgestaltet, nur kopfstehend. Anstelle der Durchführung 132 weist die Abdeckung 111 einen Durchbruch 119 auf. Dieser Durchbruch 119 kann, wie weiter unten beschrieben, einem Dosierkopf 122 angepasst sein.

Die geteilte Rückwand 116 erstreckt sich in ihrer Breite über die gesamte, ihr zugewandte Endkante 136 des Bodens 115 und beinhaltet ein erstes Rückwandteil 117 und ein zweites Rückwandteil 118, wobei das erste Rückwandteil 117 mit der Abdeckung 111 und das zweite Rückwandteil 118 mit dem Boden 115 und mit dem Sockelgehäuse 130 fest verbunden sind. Die beiden Rückwandteile 117, 118 sind derart zueinander angeordnet, dass sie flächig aneinander anliegen und daher einander teilweise überlappen, aber dennoch relativ zueinander vertikal verschiebbar sind.

Die Abdeckung 111 und die mit ihr verbundenen Wände sind relativ zum Sockelgehäuse 130 in vertikaler Richtung verschiebbar. Damit dies möglich ist, müssen die Frontwand 114 und die beiden Seitenwände 112, 113 an den ihnen zugewandten Endkanten 133, 134, 135 des Bodens 115 und an den, den Endkanten 133, 134, 135 anschliessenden Gehäusewänden 137, 138, 139 des Sockelgehäuses 130 in vertikaler Richtung vorbeigeführt werden können. Vorzugsweise sind deshalb die Gehäusewände 137, 138, 139 des Sockelgehäuses 130 vertikal abfallend ausgestaltet und die Seitenwände 112, 113 und die Frontwand 114 überlappen diese Gehäusewände 137, 138, 139 teilweise, um einen winddichten Wägeraum zu erzielen. Die Höhe des Sockelgehäuses 130 richtet sich dabei vorzugsweise nach der vertikalen Verschiebestrecke der Abdeckung 111 relativ zum Boden 115 beziehungsweise zur Waagschale 131. Sofern eine nicht dargestellte Auflagefläche des Laborgerätes 100, beispielsweise ein Labortisch, geeignete Aussparungen aufweist, in welche bei einer Verschiebung der Abdeckung 111 die Frontwand 114 und die Seitenwände 112, 113 eindringen können, kann die Höhe des Sockelgehäuses 130 auch geringer gewählt werden.

Die Dosiervorrichtung 120 weist eine nicht dargestellte Antriebs- und Steuereinheit auf, welche in einem Dosiervorrichtungsgehäuse 121 untergebracht ist. Ein Dosierkopf 122 ist in eine Dosierkopfhalterung 123 der Dosiervorrichtung 120 lösbar eingesetzt und kann mit der Antriebs- und Steuereinheit gekoppelt werden. Ferner ragt ein Teil des Dosierkopfs 122 durch den Durchbruch 119 hindurch in den Wägeraum 140 hinein. Der Durchbruch 119 ist dem entsprechenden Querschnitt des Dosierkopfs 122 angepasst, welcher sich bei in die Dosierkopfhalterung 123 eingesetztem Dosierkopf 122 im Bereich des Durchbruchs 119 befindet. Dadurch kann verhindert werden, dass Luftströmungen aus der Umgebung über den Durchbruch 119 in den Wägeraum 140 gelangen können. Je nach Ausgestaltung des Dosierkopfs 122 und des in der Abdeckung 111 vorhandenen Durchbruchs 119 kann auch auf eine Dosierkopfhalterung 123 verzichtet werden.

Vorzugsweise ist deshalb zumindest der Dosierkopf 122 oder wie in der Figur 1 dargestellt, die gesamte Dosiervorrichtung 120 mit der Abdeckung 111 verbunden und folgt der vertikalen Verschiebung der Abdeckung 111 nach. Die in Figur 1 dargestellte Lage der Abdeckung 111 entspricht dem maximal möglichen Abstand vom Boden 115.

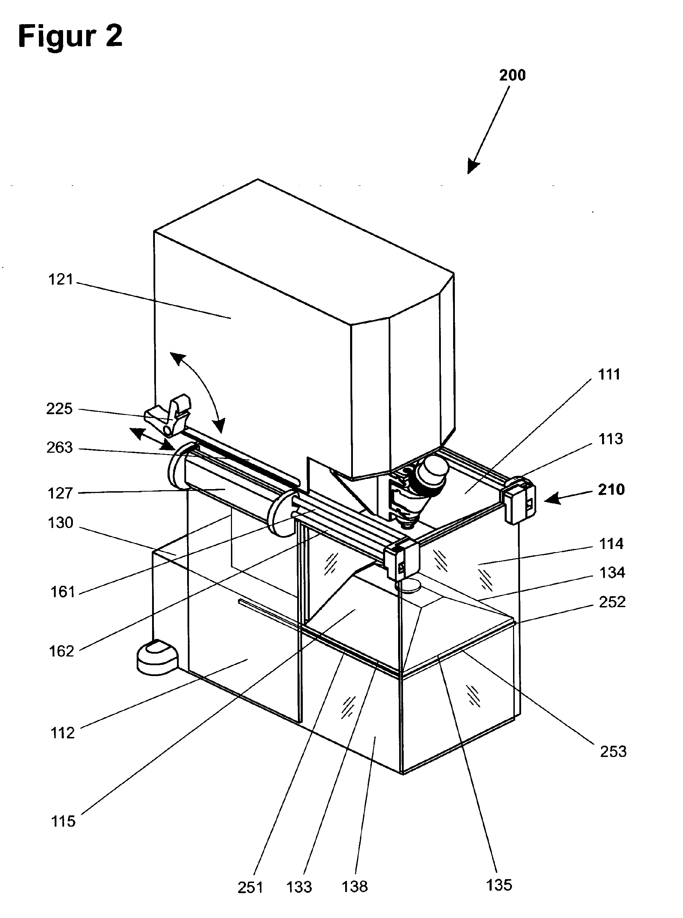

Die Figur 2 zeigt das Laborgerät 200, welches nahezu vollständig dem Laborgerät 100 aus Figur 1 entspricht. Anders als in Figur 1, ist in Figur 2 die Windschutzvorrichtung 210 des Laborgeräts 200 mit der geöffneten ersten Seitenwand 112 dargestellt und die Lage der Abdeckung 111 entspricht dem minimal möglichen Abstand zum Boden 115.

Da die Windschutzvorrichtung 210 des Laborgeräts 200 möglichst alle in der Umgebung des Laborgeräts 200 vorhandenen Luftströmungen abhalten soll, ist die der ersten Seitenwand 112 zugewandte Endkante 133 mit einer ersten Dichtungsgleitleiste 251 versehen. Auch zwischen der zweiten Seitenwand 113 und der ihr zugewandten Endkante 134 ist eine zweite Dichtungsgleitleiste 252, sowie zwischen der Frontwand 114 und der ihr zugewandten Endkante 135 eine dritte Dichtungsgleitleiste 253 angeordnet. Wie die Figur 2 zeigt, erstreckt sich die mit der ersten Seitenwand 112 in Berührung stehende erste Dichtungsgleitleiste 251 nahezu über die gesamte erste Gehäusewand 138 des Sockelgehäuses 130. Diese hat die Aufgabe, einen möglichen Spalt zwischen der Endkante 133 des Bodens 115 und der ersten Seitenwand 112 abzudichten und eine schonende Verschiebung der ersten Seitenwand 112 relativ zur Endkante 133 zu ermöglichen, so dass die erste Seitenwand 112 nicht zerkratzt wird.

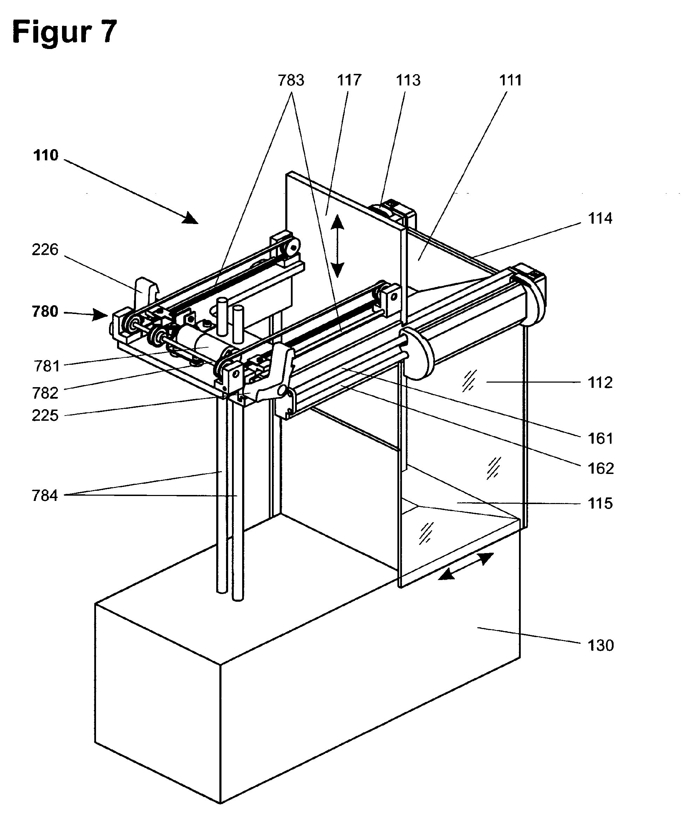

In Figur 2 ist ferner ein erster Mitnehmer 225 in der Form eines Winkelhebels dargestellt. Dieser kann entlang eines im Dosiervorrichtungsgehäuse 121 vorhandenen und zu den Führungsschienen 161, 162 parallelen Langlochs 263 linear verschoben werden. Diese Verschiebung erfolgt mittels eines im Dosiervorrichtungsgehäuse 121 untergebrachten, nicht dargestellten Antriebs. Dieser wird in der Beschreibung von Figur 7 weiter unten ausführlicher erklärt. Der erste Mitnehmer 225 kann durch einfaches Verschwenken mit dem Führungsstück 127 gekoppelt werden, wodurch sich die Bewegung des ersten Mitnehmers 225 auf die erste Seitenwand 112 überträgt. In analoger Weise kann für die zweite Seitenwand 113 ein zweiter Mitnehmer vorhanden sein, wobei beide Mitnehmer synchron durch den Antrieb bewegt werden. Wenn die erste Seitenwand 112 nicht mit dem ersten Mitnehmer 225 gekoppelt ist, kann diese manuell verschoben werden.

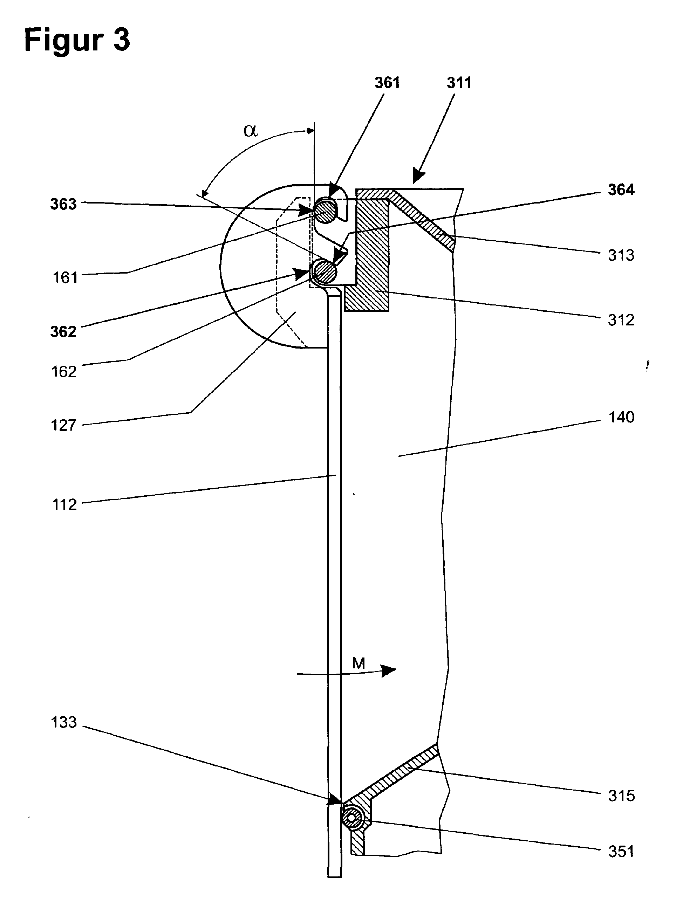

Figur 3 zeigt eine Detailansicht der verschiebbaren Seitenwand 112 sowie eines Teils des Wägeraums 140, der Abdeckung 311 und des Bodens 315 sowie der Führungsschienen 161, 162 im Schnitt. Die Abdeckung 311 ist in einen Abdeckungsrahmen 312 und in ein Abdeckteil 313 unterteilt, so dass das Abdeckteil 313 auf einfache Weise vom Abdeckungsrahmen 312 getrennt und gereinigt werden kann.

Das an der verschiebbaren Seitenwand 112 angeordnete Führungsstück 127 weist eine erste Ausnehmung 361 und eine zweite Ausnehmung 362 auf. Durch die erste Ausnehmung 361 ist die erste Führungsschiene 161 und durch die zweite Ausnehmung 362 ist die zweite Führungsschiene 162 orthogonal zur Zeichnungsebene hindurchgeführt. An der ersten Ausnehmung 361 ist eine Führungsstelle 363 ausgebildet, die im Betriebszustand der Windschutzvorrichtung im Wesentlichen vertikal ausgerichtet ist und an der ersten Führungsschiene 161 anliegt. Die zweite Ausnehmung 362 weist eine Führungsflanke 364 auf, welche an der zweiten Führungsschiene 162 aufliegt. Der Neigungswinkel $\alpha$ der Führungsflanke 364 zur Führungsstelle 363 beziehungsweise zur Vertikalen ist derart gewählt, dass im Betriebszustand der Windschutzvorrichtung die verschiebbare Seitenwand 112 gegen die Schwerkraft abgestützt ist und die verschiebbare Seitenwand 112 infolge ihres Eigengewichts und im Zusammenwirken mit der Führungsstelle 363 als Schwenk-Loslagerstelle ein gegen den Boden 315 gerichtetes Drehmoment **M** aufweist. Dieses Drehmoment **M** wird durch die der Seitenwand 112 zugewandte Endkante 133, beziehungsweise durch die im Bereich der Endkante 133 angeordnete Dichtungswalze 351 abgestützt.

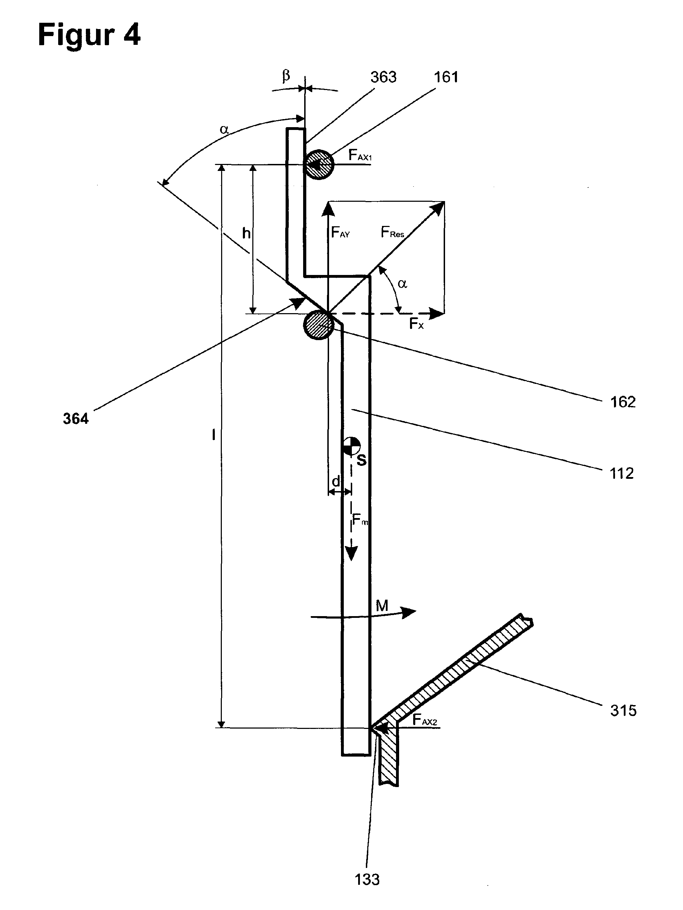

Die an der verschiebbaren Seitenwand 112 angreifenden und diese abstützenden Kräfte sind in der schematisch gehaltenen Figur 4 gezeigt und werden nachfolgend erläutert. Die auf die wesentlichen funktionalen Ausbildungen reduzierte Seitenwand 112 aus der Figur 3 weist eine Eigenmasse auf, welche zur einfacheren Darstellung auf den Massenschwerpunkt **S** konzentriert ist. Folglich wirkt an der Seitenwand 112 die im Massenschwerpunkt **S** angreifende Gewichtskraft $F_m$. Wie in Figur 3 beschrieben und in Figur 4 eingezeichnet, wird die Gewichtskraft $F_m$ durch die Führungsflanke 364 an der zweiten Führungsschiene 162 abgestützt, gemäss der Bedingung:

$$F_{AY} = F_m \,,$$

wobei $F_{AY}$ die vertikale Abstützkraft ist.

Durch den Neigungswinkel $\alpha$ der Führungsflanke 364 zur Führungsstelle 363 resultiert aus der vertikalen Abstützkraft $F_{AY}$ der in orthogonaler Richtung zur Führungsflanke 364 gerichtete resultierende Kraftvektor $F_{Res}$ in der Grösse:

$$F_{Res} = F_{AY} / \sin(\alpha)$$

Entsprechend wirkt an der Seitenwand 112 auch ein horizontaler Kraftvektor $F_X$ in der Grösse:

$$F_X = F_{AY} / \tan(\alpha)$$

Aufgrund dieses horizontalen Kraftvektors $F_X$ wird die Führungsstelle 363 gegen die im Schienenabstand h angeordnete erste Führungsschiene 161 gepresst, somit durch eine erste horizontale Abstützkraft $F_{AX1}$ abgestützt und es resultiert entsprechend der Darstellung in Figur 4 ein auf die Seitenwand 112 wirkendes und gegen den Boden 315 gerichtetes Drehmoment $M$ in der Grösse:

$$M = F_X * h - F_m * d$$

Wie aus der Figur 4 durch die gezeigte Lage des Schwerpunktes $S$ ersichtlich ist, wird das Drehmoment $M$ durch die im Schwerpunkt $S$ im Schwerpunktabstand $d$ zur zweiten Führungsschiene 162 wirkende Gewichtskraft $F_m$ verringert. Mit einer Verlegung des Schwertpunktes $S$ auf die andere Seite der zweiten Führungsschiene 162 kann das Drehmoment $M$ natürlich auch erhöht werden.

Ferner ist ersichtlich, dass der Neigungswinkel $\alpha$ zwischen der Führungsflanke 364 und der Führungsstelle 363 sowie der Ausrichtungswinkel $\beta$ der Führungsstelle 363 zur Richtung der Gewichtskraft $F_m$ für die Kräfteverteilung der Auflagekräfte zwischen der ersten Führungsschiene 161 und der zweiten Führungsschiene 162 massgebend ist. Im vorliegenden Ausführungsbeispiel ist der Ausrichtungswinkel $\beta = 0°$, die Führungsstelle 363 ist somit vertikal ausgerichtet. Selbstverständlich kann der Ausrichtungswinkel $\beta \geq 0°$ sein, wobei dessen Grösse dahingehend bemessen sein muss, dass immer ein gegen den Boden 315 gerichtetes Drehmoment $M$ an der Seitenwand 112 wirkt. Die Positionen der Führungsschienen 161, 162 und der Endkante 133 zueinander sowie der Neigungswinkel $\alpha$ und der Ausrichtungswinkel $\beta$ müssen aber dann mit hoher Präzision aufeinander abgestimmt gefertigt sein.

Das Drehmoment $M$ wird von der Endkante 133 abgestützt, woraus eine zweite horizontale Abstützkraft $F_{AX2}$ in der Grösse:

$$F_{AX2} = M / l$$

und eine erste horizontale Abstützkraft $F_{AX1}$ in der Grösse:

$$F_{AX1} = F_X - F_{AX2}$$

resultieren. Der Endkantenabstand $l$ entspricht dem Abstand der Endkante 133 zur ersten Führungsschiene 161.

Aus den Gleichungen ist ersichtlich, wie mittels des Neigungswinkels $\alpha$ sowie mit den Abständen $d, h$ und $l$ die erste horizontale Abstützkraft $F_{AX1}$ und die zweite horizontale Abstützkraft $F_{AX2}$ bei einer gegebenen Eigenmasse beziehungsweise Gewichtskraft $F_m$ beeinflusst werden können. Die Kenntnis dieser Kräfteverhältnisse ist deshalb wichtig, weil die Gleitreibung der verschiebbaren Seitenwand 112 massgeblich die Auslegung des Antriebs, den Bedienkomfort bei Handbedienung und den Abrieb zwischen der Seitenwand 112 und der ersten Führungsschiene 161, der zweiten Führungsschiene 162 und der Endkante 133 beeinflussen. Dem entsprechend kann der Neigungswinkel $\alpha$ gezielt der Abriebfestigkeit der der Gleitreibung unterworfenen Materialien angepasst werden, ohne die Stabilität der Seitenwand 112 gegen daran angreifende Luftströmungen unnötigerweise zu verringern.

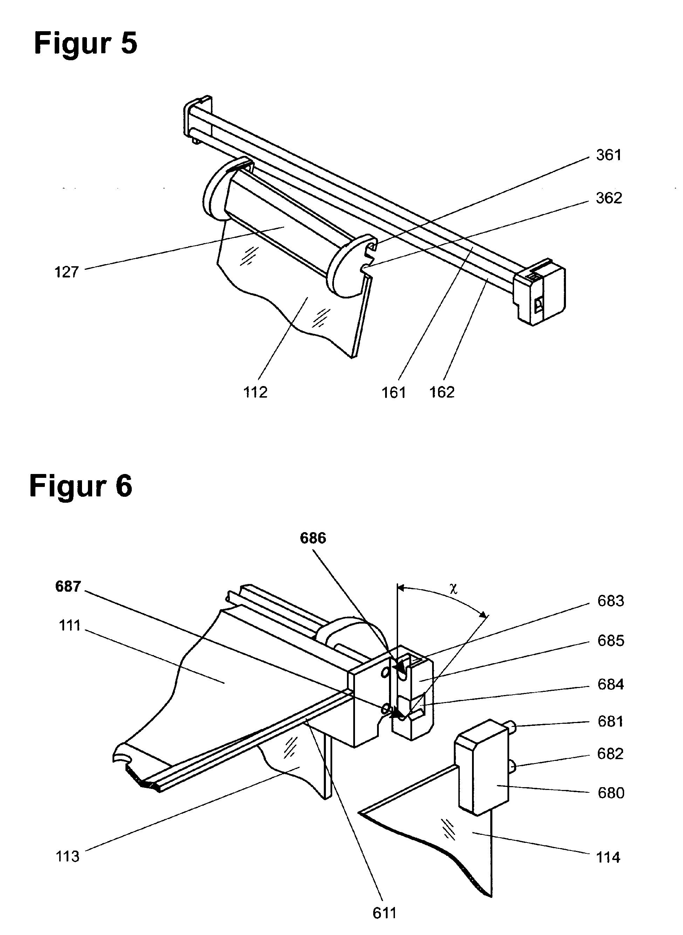

Die Figur 5 zeigt eine dreidimensional dargestellte Detailansicht einer lösbaren Seitenwandbefestigung, wie sie bereits in den vorangehenden Figuren anhand der ersten Seitenwand 112 dargestellt, aber nicht beschrieben ist. Das Führungsstück 127 weist die erste Ausnehmung 361 und die zweite Ausnehmung 362 auf, welche schlitzförmig ausgebildet und gegen die Richtung der Schwerkraft gerichtet sind, so dass die erste Seitenwand 112 in die erste Führungsschiene 161 und in die zweite Führungsschiene 162 eingehängt werden kann. Die beiden Führungsschienen 161, 162 verleihen der eingehängten Seitenwand 112 Stabilität, so dass diese nur entlang der Führungsschienen 161, 162 horizontal verschiebbar sowie mit einer Schwenk- und Ziehbewegung entgegen der Richtung der Schwerkraft von den Führungsschienen 161, 162 lösbar ist.

Die Figur 6 zeigt dreidimensional eine Detailansicht einer lösbaren Frontwandbefestigung, wie sie bereits in der Figur 1 dargestellt, aber nicht beschrieben ist. Der Übersichtlichkeit wegen ist nur ein Teil der Abdeckung 111, dessen Abdeckungsendkante 611 sowie ein Teil der zweiten Seitenwand 113 und ein Teil der von der Abdeckung 111 getrennten Frontwand 114 zu sehen. Damit die Frontwand 114 mit der Abdeckung 111 lösbar verbunden werden kann und erfindungsgemäss ein gegen den Boden gerichtetes Drehmoment aufweist, beinhaltet die Frontwand 114 an jeder der Abdeckung 111 zugewandten Ecke je ein Bolzenstück 680 mit einem ersten Bolzen 681 und mit einem zweiten Bolzen 682. Die beiden Bolzen 681, 682 können in eine erste Nut 683 und in eine zweite Nut 684 eingehängt werden, welche an einer Halterung 685 ausgebildet sind. Je eine dieser Halterungen 685 ist in jeder, der Frontwand 114 zugewandten Ecke der Abdeckungsendkante 611 angeordnet. Eine mit dieser Frontwandbefestigung ausgestattete Frontwand 114 ist mit einem einzigen Handgriff aus den Halterungen 685 lösbar beziehungsweise in diese einsetzbar.

Wie in der Figur 6 gezeigt, weist die erste Nut 683 parallele, vertikale Seiten auf, die als Bolzenführungsstelle 686 dienen. Die zweite Nut 684 weist eine unter einem Bolzenführungsflankenwinkel $\chi$ zur Vertikalen angeordnete Bolzenführungsflanke 687 auf. Wie bereits in der Figur 4 am Beispiel der Seitenwand 113 ausführlich beschrieben, weist die eingesetzte Frontwand 114 durch die erfindungsgemässe Ausgestaltung der ersten Nut 683 und zweiten Nut 684 wie die Seitenwand 113 ein gegen den Boden gerichtetes Drehmoment auf. Dieses wird ebenfalls durch die Endkante des Bodens abgestützt. Entsprechend bietet die Ausgestaltung mit zwei Bolzen 681, 682 und zwei Nuten 683, 684 der Frontwand 114 eine stabile ausgerichtete Position zur Abdeckung 111, ohne dass diese in den Halterungen 685 pendelt.

In der Figur 7 wird in dreidimensionaler Darstellung die erfindungsgemässe Windschutzvorrichtung 110 von Hinten gezeigt, welche der Windschutzvorrichtung 110 aus der Figur 1 entspricht. Sämtliche Verschalungen und die gesamte Dosiervorrichtung wurden weggelassen, um einige Einzelheiten des bereits weiter oben erwähnten Antriebs 780 zu zeigen. Lediglich das Sockelgehäuse 130 ist auch hier dargestellt, um die vertikale Führung der Abdeckung 111 und der mit ihr verbundenen beiden Seitenwände 112, 113 und der Frontwand 114 anschaulicher zu zeigen, da das Sockelgehäuse 130 gleichzeitig die Basis des Bodens 115 bildet. Der Antrieb 780 weist einen Motor 781 auf, dessen Bewegungen über ein Zahnriemengetriebe 782 an den ersten Mitnehmer 225 und an einen zweiten Mitnehmer 226 übertragen werden. Beide Mitnehmer 225, 226 sind an Längsführungen 783 parallel zu den Führungsschienen 161, 162 der horizontal verschiebbaren Seitenwände 112, 113 geführt und können unabhängig voneinander mit der ihnen zugeordneten Seitenwand 112, 113 gekoppelt werden.

Ferner sind in Figur 7 zwei Vertikalführungen 784 schematisch dargestellt, um die vertikale Verschiebbarkeit der Abdeckung 111 sowie den mit ihr verbundenen Seitenwänden 112, 113, der Frontwand 114, dem ersten Rückwandteil 117 und dem Antrieb 780 aufzuzeigen. Selbstverständlich weist die Windschutzvorrichtung 110 auch für die vertikale Verschiebung eine Antriebseinheit auf, diese ist aber zugunsten der Übersichtlichkeit nicht dargestellt.

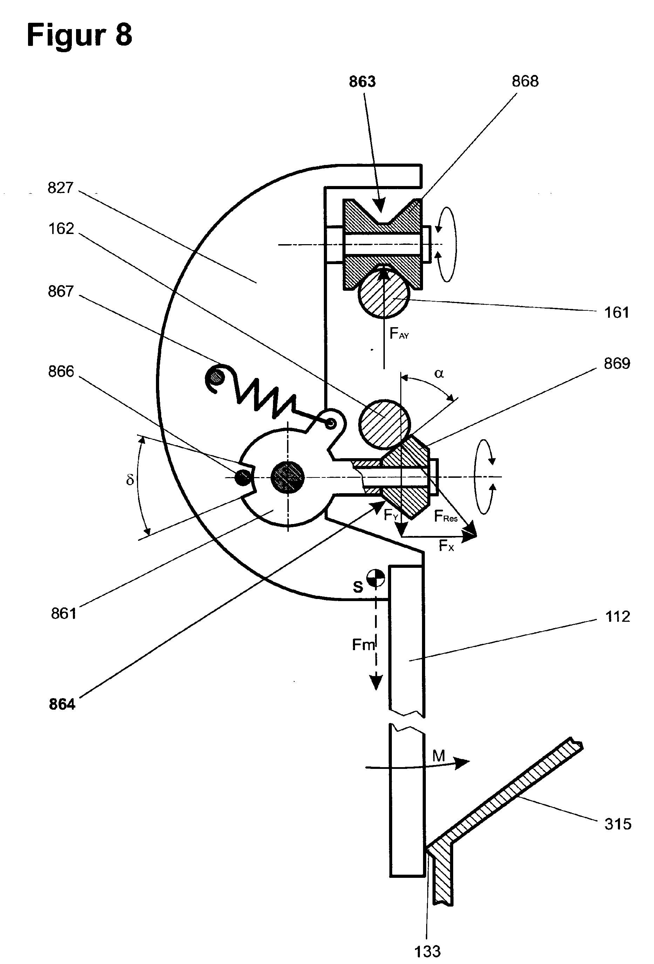

Figur 8 zeigt eine Detailansicht des Führungsstücks 827 und der ersten Führungsschiene 161 und zweiten Führungsschiene 162 im Schnitt. Anstelle einer starren Führungsstelle weist das Führungsstück 827 eine erste starr gelagerte Führungsrolle 868 auf. Diese weist eine umlaufende V-förmige Rille 863 auf, in welcher die erste Führungsschiene 161 bei eingehängtem Führungsstück angeordnet ist. Dadurch wird die Gewichtskraft $F_m$ des Führungsstücks 827 und der mit ihm verbundenen Seitenwand 112 gegen die Schwerkraft abgestützt. Zudem wird durch die Rille 863 das Führungsstück 827 seitlich geführt. Ferner weist das Führungsstück 827 anstelle einer starren Führungsflanke eine die Führungsflanke 864 aufweisende zweite Führungsrolle 869 auf. Dadurch lässt sich der Reibungswiderstand beim Verschieben der Seitenwand 112 entlang der Führungsschienen 161, 162 deutlich reduzieren. Die Führungsrolle 869 ist mittels eines Schwenklagers 861 um einen durch Anschlagsflächen begrenzten Schwenkwinkel $\delta$ schwenkbar gela-gert, wobei eine Zugfeder 867 das Schwenklager 861 gegen einen Anschlag 866 vorspannt, wenn das Führungsstück 827 nicht in die Führungen 161, 162 eingehängt ist. Wenn das Führungsstück 827 in die Führungsschienen 161, 162 eingehängt werden soll, muss die Führungsrolle 869 soweit verschwenkt werden, dass zwischen beiden Führungsrollen 868, 869 genügend Freiraum zum einrasten vorhanden ist. Bei eingesetztem Führungsstück 827 ist, wie dargestellt, das Schwenklager 861 vom Anschlag 866 entkoppelt und die vom Federelement 867 ausgeübte Federkraft wirkt auf die zweite Führungsschiene 162. Aufgrund der im Neigungswinkel $\alpha$ zur Horizontalen angeordneten Führungsflanke 864 und der Federkraft wird der resultierende Kraftvektor $F_{Res}$ auf die zweite Führungsschiene 162 ausgeübt, welche sich wiederum in einen horizontalen Kraftvektor $F_X$ und in einen vertikalen Kraftvektor $F_Y$ aufteilen lässt. Da der vertikale Kraftvektor $F_Y$ in derselben Richtung wirkt wie die Schwerkraft $F_m$, beträgt die vertikale Abstützkraft $F_{AY} = F_m + F_Y$. Wie schon in Figur 4 erläutert, bewirkt der horizontale Kraftvektor $F_X$ ein Drehmoment $M$, welches an der Endkante 133 des Bodens 315 abgestützt wird.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden. Unter anderem sind Ausführungsformen der Erfindung denkbar, bei welchen beispielsweise auch die Führungsstelle an einer im Führungsstück drehbar angeordneten Führungsrolle ausgebildet ist oder eine Seitenwand mit einem Halterungsmittel analog der Frontwand ausgerüstet ist. Selbstverständlich sind auch in zwei oder mehrere Segmente vertikal geteilte Seitenwände mit den erfindungsgemässen Führungsmittel ausrüstbar, so dass jedes der einzelnen Segmente gegen die Schwerkraft abgestützt, ein gegen den Boden gerichtetes Drehmoment aufweisen. Zudem kann die Seitenwand oder Frontwand auch mittels einer Gelenkstelle mit dem Führungsmittel beziehungsweise dem Halterungsmittel verbunden sein, wobei das Drehmoment durch ein in der Gelenkstelle angeordnetes Federelement erzeugbar ist. Ferner können die Führungsschienen an der verschiebbaren Seitenwand und das Führungsstück an der Abdeckung, an der Frontwand oder an der Rückwand angeordnet sein. Des weitern kann das Führungsstück anstatt einstückig ausgebildet zu sein, auch mehrere Einzelteilen aufweisen.

Bezugszeichenliste

| | |
|---|---|
| 200, 100 | Laborgerät |
| 210, 110 | Windschutzvorrichtung |
| 311, 111 | Abdeckung |
| 112 | erste Seitenwand |
| 113 | zweite Seitenwand |
| 114 | Frontwand |
| 315, 115 | Boden |
| 116 | Rückwand |
| 117 | erstes Rückwandteil |
| 118 | zweites Rückwandteil |
| 119 | Durchbruch |
| 120 | Dosiervorrichtung |
| 121 | Dosiervorrichtungsgehäuse |
| 122 | Dosierkopf |
| 123 | Dosierkopfhalterung |
| 827, 127 | Führungsstück |
| 130 | Sockelgehäuse |
| 131 | Waagschale |
| 132 | Durchführung |
| 133 | der ersten Seitenwand zugewandte Endkante |
| 134 | der zweiten Seitenwand zugewandte Endkante |
| 135 | der Frontwand zugewandte Endkante |
| 136 | der Rückwand zugewandte Endkante |
| 137 | dritte Gehäusewand |
| 138 | erste Gehäusewand |
| 139 | zweite Gehäusewand |
| 140 | Wägeraum |
| 161 | erste Führungsschiene |
| 162 | zweite Führungsschiene |
| 225 | erster Mitnehmer |

(fortgesetzt)

| | |
|---|---|
| 226 | zweiter Mitnehmer |
| 251 | erste Dichtungsgleitleiste |
| 252 | zweite Dichtungsgleitleiste |
| 253 | dritte Dichtungsgleitleiste |
| 263 | Langloch |
| 312 | Abdeckungsrahmen |
| 313 | Abdeckteil |
| 351 | Dichtungswalze |
| 361 | erste Ausnehmung |
| 362 | zweite Ausnehmung |
| 363 | Führungsstelle |
| 864, 364 | Führungsflanke |
| 611 | Abdeckungsendkante |
| 680 | Bolzenstück |
| 681 | erster Bolzen |
| 682 | zweiter Bolzen |
| 683 | erste Nut |
| 684 | zweite Nut |
| 685 | Halterung |
| 686 | Bolzenführungsstelle |
| 687 | Bolzenführungsflanke |
| 780 | Antrieb |
| 781 | Motor |
| 782 | Zahnriemengetriebe |
| 783 | Längsführung |
| 784 | Vertikalführung |
| 861 | Schwenklager |
| 863 | Rille |
| 866 | Anschlag |
| 867 | Zugfeder |
| 868 | erste Führungsrolle |
| 869 | zweite Führungsrolle |
| $\alpha$ | Neigungswinkel |
| $\beta$ | Ausrichtungswinkel |
| $\chi$ | Bolzenführungsflankenwinkel |
| $\delta$ | Schwenkwinkel |
| $S$ | Schwerpunkt |
| $F_m$ | Gewichtskraft |
| $F_{AY}$ | vertikale Abstützkraft |
| $F_{AX1}$ | erste horizontale Abstützkraft |
| $F_{AX2}$ | zweite horizontale Abstützkraft |
| $F_{Res}$ | resultierende Kraftvektor |
| $F_X$ | horizontaler Kraftvektor |
| $F_Y$ | vertikaler Kraftvektor |
| $h$ | Schienenabstand |
| $d$ | Schwerpunktabstand |
| $l$ | Endkantenabstand |
| $M$ | Drehmoment |

**Patentansprüche**

1. Windschutzvorrichtung (110, 210) für ein Laborgerät (100, 200), die einen eine Waagschale (131) umgebenden Wägeraum (140) umschliesst und eine Rückwand (116), eine Frontwand (114), zwei Seitenwände (112, 113), eine Abdeckung (111, 311) und einen durch Endkanten (133, 134, 135, 136) begrenzten Boden (115) beinhaltet, **dadurch gekennzeichnet, dass** die Windschutzvorrichtung (110, 210) zur Führung mindestens einer, horizontal verschiebbaren Seitenwand (112, 113) mindestens ein mit der Abdeckung (111, 311) verbundenes Führungsmittel und/oder zur Halterung der Frontwand (114) ein mit der Abdeckung (111, 311) verbundenes Halterungsmittel aufweist, durch welche Mittel die mindestens eine Seitenwand (112, 113) und/oder die Frontwand (114) gegen die Schwerkraft abgestützt ist und ein gegen den Boden (115, 315) gerichtetes Drehmoment (M) aufweist, welches Drehmoment (M) durch die der Seitenwand (112, 113) und/oder Frontwand (114) zugewandte Endkante (133, 134, 135) abgestützt ist.

2. Windschutzvorrichtung (110, 210) nach Anspruch 1, **dadurch gekennzeichnet, dass** als Führungsmittel

   • eine erste Führungsschiene (161) und eine, zur ersten Führungsschiene (161) parallel sich erstreckende zweite Führungsschiene (162) an der der Seitenwand (112, 113) zugewandten Seite der Abdeckung (111, 311) angeordnet ist,
   • die verschiebbare Seitenwand (112, 113) mindestens ein Führungsstück (127, 827) mit zwei Ausnehmungen (361, 362) aufweist und durch jede Ausnehmung (361, 362) je eine Führungsschiene (161, 162) hindurchgeführt ist,
   • die erste Ausnehmung (361) eine Führungsstelle (363) aufweist und die zweite Ausnehmung (362) eine Führungsflanke (364) aufweist,
   • im Betriebszustand der Windschutzvorrichtung (110, 210) die Führungsstelle (363) im Wesentlichen vertikal ausgerichtet ist und an der ersten Führungsschiene (161) anliegt und die Führungsflanke (364) an der zweiten Führungsschiene (162) aufliegt, wobei der Neigungswinkel ($\alpha$) der Führungsflanke (364) zur Vertikalen derart gewählt ist,

      o dass die verschiebbare Seitenwand (112, 113) gegen die Schwerkraft abgestützt ist und
      o dass die verschiebbare Seitenwand (112, 113) infolge ihres Eigengewichts und im Zusammenwirken mit der Führungsstelle (363) als Schwenk- Loslagerstelle ein gegen den Boden (115, 315) gerichtetes Drehmoment (M) aufweist, welches Drehmoment (M) durch die der Seitenwand (112, 113) zugewandte Endkante (133, 134) abgestützt ist.

3. Windschutzvorrichtung (110, 210) nach Anspruch 2, **dadurch gekennzeichnet, dass** im Führungsstück (127, 827) mindestens eine Rolle (868, 869) angeordnet ist, welche die Führungsflanke (364, 864) und/oder die Führungsstelle (363) beinhaltet.

4. Windschutzvorrichtung (110, 210) nach Anspruch 2 oder 3, **dadurch gekennzeichnet, dass** die Ausnehmungen (361, 362) schlitzförmig ausgebildet sind und jeweils ein Ende der Ausnehmungen (361, 362) in einer Seitenkante des Führungsstücks (127, 827) endet, wodurch die Seitenwand (112, 113) in die Führungsschienen (161, 162) einhängbar ist.

5. Windschutzvorrichtung (110, 210) nach Anspruch 1, **dadurch gekennzeichnet, dass** als Führungsmittel

   • eine erste Führungsschiene (161) und eine, zur ersten Führungsschiene (161) parallel sich erstreckende zweite Führungsschiene (162) an der der Seitenwand (112, 113) zugewandten Seite der Abdeckung (111, 311) angeordnet ist,
   • die verschiebbare Seitenwand (112, 113) mindestens ein Führungsstück (827) aufweist, welches mindestens eine starr gelagerte erste Führungsrolle (868) und eine, mit einer Federkraft eines Federelements (867) beaufschlagte, schwenkbar gelagerte zweite Führungsrolle (869) beinhaltet,
   • die verschiebbare Seitenwand (112, 113) an der ersten Führungsschiene (161) durch die erste Führungsrolle (868) gegen die Schwerkraft abgestützt und orthogonal zur Verschieberichtung seitlich geführt ist,
   • die verschiebbare Seitenwand (112, 113) durch die schwenkbare, zweite Führungsrolle (869) zur zweiten Führungsschiene (162) hin vorgespannt ist und dadurch ein gegen den Boden (115, 315) gerichtetes Drehmoment (M) aufweist, welches Drehmoment (M) durch die der Seitenwand (112, 113) zugewandte Endkante (133, 134) abgestützt ist.

**6.** Windschutzvorrichtung (110, 210) nach einem der Ansprüche 1 bis 5, **dadurch gekennzeichnet, dass** an einer der Frontwand (114) zugewandten Abdeckungsendkante (611) der Abdeckung als Halterungsmittel

- an beiden Enden der Abdeckungsendkante (611) je eine Halterung (685) mit je zwei sich parallel zur Abdeckungsendkante (611) erstreckenden Nuten (683, 684) angeordnet ist,
- an jeder der Abdeckungsendkante (611) zugewandten Ecken der Frontwand (114) ein Bolzenstück (680) mit je zwei, sich parallel zur Abdeckungsendkante (611) erstreckenden Bolzen (681, 682) angeordnet ist,
- die erste Nut (683) eine Bolzenführungsstelle (686) aufweist und die zweite Nut (684) eine Bolzenführungsflanke (687) aufweist,
- im Betriebszustand der Windschutzvorrichtung (110, 210) die Bolzenführungsstelle (686) im Wesentlichen vertikal ausgerichtet ist und der erste Bolzen (681) an dieser anliegt und der zweite Bolzen (682) an der Bolzenführungsflanke (687) aufliegt, wobei der Bolzenführungsflankenwinkel ($\chi$) der Bolzenführungsflanke (687) zur Vertikalen derart gewählt ist,

  o dass die Frontwand (114) gegen die Schwerkraft abgestützt ist und
  o dass die Frontwand (114) infolge ihres Eigengewichts und im Zusammenwirken mit der Bolzenführungsstelle (686) als Schwenk- Loslagerstelle ein gegen den Boden (115, 315) gerichtetes Drehmoment (M) aufweist, welches Drehmoment (M) durch die der Frontwand (114) zugewandte Endkante (135) abgestützt ist.

**7.** Windschutzvorrichtung (110, 210) nach einem der Ansprüche 1 bis 6, **dadurch gekennzeichnet, dass** die mindestens eine Seitenwand (112, 113) und/oder Frontwand (114) lösbar mit der Abdeckung (111, 311) verbunden ist.

**8.** Windschutzvorrichtung (110, 210) nach einem der Ansprüche 1 bis 7, **dadurch gekennzeichnet, dass** mindestens eine Verriegelungsvorrichtung im Führungsstück (127, 827) angeordnet ist, die im Betriebszustand der Windschutzvorrichtung (110, 210) mindestens eine der Führungsschienen (161, 162) teilweise umfasst, so dass das Führungsstück (127, 827) nur bei betätigter Verriegelungsvorrichtung von den Führungsschienen (161, 162) trennbar ist.

**9.** Windschutzvorrichtung (110, 210) nach einem der Ansprüche 1 bis 8, **dadurch gekennzeichnet, dass** eine mindestens über die Länge der Endkante (133, 134, 135, 136) sich erstreckende Dichtungsgleitleiste (251, 252, 253), Dichtungsbürste oder Dichtungswalze (351) an mindestens einer Endkante (133, 134, 135, 136) des Bodens (115, 315) angeordnet ist.

**10.** Windschutzvorrichtung (110, 210) nach einem der Ansprüche 1 bis 9, **dadurch gekennzeichnet, dass** mittels zweier Vertikalführungen (784) die Abdeckung (111, 311) und mindestens eine der beiden Seitenwände (112, 113) und/oder die Frontwand (114) und/oder die Rückwand (116) relativ zum Boden (115, 315) vertikal verschiebbar sind.

**11.** Windschutzvorrichtung (110, 210) nach Anspruch 10, **dadurch gekennzeichnet, dass** zur vertikalen Verschiebung der Abdeckung (111, 311) mindestens ein Antrieb (780) vorhanden ist.

**12.** Windschutzvorrichtung (110, 210) nach einem der Ansprüche 1 bis 11, **dadurch gekennzeichnet, dass** zur horizontalen Verschiebung der mindestens einen Seitenwand (112, 113) mindestens ein Antrieb (780) vorhanden ist.

**13.** Laborgerät (100, 200) mit einer Windschutzvorrichtung (110, 210) nach einem der Ansprüche 1 bis 12, wobei das Laborgerät (100, 200) insbesondere eine Waage, ein Dosiergerät oder eine Pipettiervorrichtung ist.

**Claims**

**1.** Draft protection device (110, 210) for a laboratory instrument (100, 200), which encloses a weighing compartment (140) surrounding a balance pan (131) and comprises a rear wall (116), a front wall (114), two sidewalls (112, 113), a top cover (111, 311), and a floor (115) delimited by border edges (133, 134, 135, 136), **characterized in that** the draft protection device (110, 210) comprises at least one guiding means which is connected to the top cover (111, 311) and serves to guide at least one horizontally slidable sidewall (112, 113), and/or comprises a holder means which is connected to the top cover (111, 311) and serves to hold the front wall (114) in place, wherein the guiding means and/or the holder means supports the weight of the at last one sidewall (112, 113) and/or the front wall (114) in such a way that said at last one sidewall (112, 113) and/or front wall (114) is pushed by a biasing torque (M) against the floor (115, 315), where said torque (M) is supported by the border edge (133, 134, 135) that faces towards the respective sidewall (112, 113) and/or front wall (114).

2.  Draft protection device (110, 210) according to claim 1, **characterized in that** as a guiding means

    • a first guide rail (161) and, running parallel to the latter, a second guide rail (162) are arranged on the side of the top cover (111, 311) that faces towards the side wall (112, 113),
    • the slidable sidewall (112, 113) comprises at least one guide element (127, 827) with two recesses (361, 362) in an arrangement where each of the guide rails (161, 162) passes, respectively, through one of the recesses (361, 362),
    • the first recess (361) has a guiding contact area (363) and the second recess (362) has a guiding flank (364),
    • in the operating state of the draft protection device (110, 210) the guiding contact area (363) is oriented substantially in the vertical direction and rests against the first guide rail (161), while the guiding flank (364) rests on the second guide rail (162) and is oriented at a slope angle ($\alpha$) relative to the vertical, said slope angle ($\alpha$) being selected so that:

    o the weight of the slidable sidewall (112, 113) is supported, and
    o the slidable sidewall (112, 113), due to its own weight and acting together with the effect of the guiding contact area (363) as a loose swivel fulcrum, is subjected to a biasing torque (M) which urges the slidable sidewall against the floor (115, 315) of the weighing compartment, where said torque (M) is supported by the border edge (133, 134) that faces towards the respective sidewall (112, 113).

3.  Draft protection device (110, 210) according to claim 2, **characterized in that** in the guide element (127, 827) there is at least one roller (868, 869) arranged which comprises the guide flank (364, 864) and/or the guide contact area (363).

4.  Draft protection device (110, 210) according to claim 2 or 3, **characterized in that** the recesses (361, 362) are slot-shaped and one end of each recess (361, 362) is open at a lateral edge of the guide element (127, 827), so that the sidewall (112, 113) can be hooked into the guide rails (161, 162).

5.  Draft protection device (110, 210) according to claim 1, **characterized in that**, to serve as said guiding means:

    • a first guide rail (161) and, parallel to the latter, a second guide rail (162) are arranged at the side of the top cover (111, 311) that faces towards the sidewall (112, 113),
    • the slidable sidewall (112, 113) further comprises at least one guide element (827) containing at least one rigidly supported first guide roller (868) and a second guide roller (869) that is held by a tiltable pivot and biased by an elastic force of an elastic element (867),
    • the first guide roller (868) supports the weight of the slidable sidewall (112, 113) on the first guide rail (161) and constrains it from moving laterally, i.e. perpendicular to the first guide rail,
    • the slidable sidewall (112, 113) is elastically biased towards the second guide rail (162) by the tiltable second guide roller (869) and is therefore subjected to a torque (M) which urges the sidewall (112, 113) towards the floor (115, 315), said torque (M) being supported by the border edge (133, 134) which faces towards the sidewall (112, 113).

6.  Draft protection device (110, 210) according to one of the claims 1 to 5, **characterized in that**, to serve as holder means at a top cover border edge (611) facing towards the front wall (114):

    • at each end of said top cover border edge (611) there is a holder (685) arranged, wherein each of the two holder devices (685) has two seating grooves (683, 684) extending parallel to the top cover edge (611),
    • at both of the corners of the front wall (114) that face towards the top cover edge (611), there is a pin block (680) arranged with two pins (681, 682) extending parallel to the top cover edge,
    • the first seating groove (683) has a pin contact area (686), and the second seating groove has a pin-guiding flank (687),
    • in the operating state of the draft protection device (110, 210), the pin contact area (686) is oriented substantially vertical, and the first pin (681) lies against the pin contact area, while the second pin (682) is resting against the pin-guiding flank (687), wherein the slope angle ($\chi$) of the pin-guiding flank (687) relative to the vertical direction is selected so that

    o the weight of the front wall (114) is being supported and

o the front wall (114), due to its own weight together with the effect of the pin contact area (686) as a loose swivel fulcrum, is pushed against the floor (115, 315) of the weighing compartment by a biasing torque (M), said torque (M) being supported by the border edge (135) that faces towards the front wall (114).

**7.** Draft protection device (110, 210) according to one of the claims 1 to 6, **characterized in that** the at least one sidewall (112, 113) and/or front wall (114) is releasably connected to the top cover (111, 311).

**8.** Draft protection device (110, 210) according to one of the claims 1 to 7, **characterized in that** there is at least one locking device arranged in the guide element (127, 827), which in the operating state of the draft protection device (110, 210) hooks partially around at least one of the guide rails (161, 162), so that the guide element (127, 827) can be separated from the guide rails (161, 162) only if the locking device is released.

**9.** Draft protection device (110, 210) according to one of the claims 1 to 8, **characterized in that** a sealing glide strip (251, 252, 253), sealing brush or sealing roller (351) extending at least over the length of the border edge (133, 134, 135, 136) is arranged along at least one border edge (133, 134, 135, 136) of the floor (115, 315).

**10.** Draft protection device (110, 210) according to one of the claims 1 to 9, **characterized by** the presence of two vertical guides (784) the top cover (111, 311) and at least one of the two sidewalls (112, 113) and/or the front wall (114) and/or the rear wall (116) are vertically slidable relative to the floor (115, 315).

**11.** Draft protection device (110, 210) according to claim 10, **characterized by** the presence of at least one drive mechanism (780) to power the vertical movement of the top cover (111, 311).

**12.** Draft protection device (110, 210) according to one of the claims 1 to 11, **characterized by** the presence of at least one drive mechanism (780) to power the horizontal movement of the at least one sidewall (112, 113).

**13.** Laboratory instrument (100, 200) with a draft protection device (110, 210) according to one of the claims 1 to 12, wherein the laboratory instrument (100, 200) is specifically a balance, a dosage-dispensing instrument or a pipetting apparatus.

## Revendications

**1.** Dispositif de paravent (110, 210) pour un appareil de laboratoire (100, 200), qui entoure un espace de pesée (140) entourant un plateau de balance (131) et contient une paroi arrière (116), une paroi frontale (114), deux parois latérales (112, 113), un revêtement (111, 311) et un sol (115) délimité par des arêtes d'extrémité (133, 134, 135, 136), **caractérisé en ce que** le dispositif de paravent (110, 210) présente pour le guidage d'au moins d'une paroi latérale (112, 113), coulissante horizontalement, au moins un moyen de guidage relié au revêtement (111, 311) et/ou pour le maintien de la paroi frontale (114) un moyen de fixation relié au revêtement (111, 311), moyens par lesquels la au moins une paroi latérale (112, 113) et/ou la paroi frontale (114) est soutenue contre la force de gravité et présente un couple (M) dirigé vers le sol (115, 315), lequel couple (M) est soutenu par l'arrête d'extrémité (133, 134, 135) tournée vers la paroi latérale (112, 113) et/ou la paroi frontale (114).

**2.** Dispositif de paravent (110, 210) selon la revendication 1, **caractérisé en ce que**, comme moyens de guidage,

- un premier rail de guidage (161) et un second rail de guidage (162), s'étendant parallèlement au premier rail de guidage (161), est disposé sur le côté, tourné vers la paroi latérale (112, 113), du revêtement (111, 311),
- la paroi latérale (112, 113) coulissante présente au moins une pièce de guidage (127, 827) avec deux évidements (361, 362) et un rail de guidage (161, 162) est guidé à travers chaque évidement (361, 362),
- le premier évidement (361) présente un point de guidage (363) et le second évidement (362) un flanc de guidage (364),
- lorsque le dispositif de paravent (110, 210) est en état de service, le point de guidage (363) est dirigé sensiblement verticalement et s'applique sur le premier rail de guidage (161) et le flanc de guidage (364) repose sur le second rail de guidage (162), l'angle d'inclinaison ($\alpha$) du flanc de guidage (364) étant choisi par rapport à la verticale de telle sorte que

o la paroi latérale (112, 113) coulissante est soutenue contre la force de gravité et
o **en ce que** la paroi latérale (112, 113) coulissante présente du fait de son propre poids et en coopération avec le point de guidage (363) comme emplacement sans palier de basculement un couple (M) dirigé vers le sol (115, 315), lequel couple (M) est soutenu par l'arrête d'extrémité (133, 134) associée à la paroi latérale (112, 113).

3. Dispositif de paravent (110, 210) selon la revendication 2, **caractérisé en ce que** dans la pièce de guidage (127, 827) est disposé au moins un galet (868, 869) qui contient le flanc de guidage (364, 864) et/ou le point de guidage (363).

4. Dispositif de paravent (110, 210) selon la revendication 2 ou 3, **caractérisé en ce que** les évidements (361, 362) sont conçus en forme de fente et à chaque fois une extrémité des évidements (361, 362) se termine dans une arête latérale de la pièce de guidage (127, 827), de telle sorte que la paroi latérale (112, 113) peut s'accrocher dans les rails de guidage (161, 162).

5. Dispositif de paravent (110, 210) selon la revendication 1, **caractérisé en ce que**, comme moyens de guidage

   • un premier rail de guidage (161) et un second rail de guidage (162), s'étendant parallèlement au premier rail de guidage (161), sont disposés sur le côté, tourné vers la paroi latérale (112, 113), du revêtement (111, 311)
   • la paroi latérale (112, 113) coulissante présente au moins une pièce de guidage (827), qui contient au moins un premier galet de guidage (868) monté de façon rigide et un second galet de guidage (869) conçu de façon basculante, sollicité avec une force de ressort d'un élément de ressort (867),
   • la paroi latérale (112, 113) coulissante est soutenue sur le premier rail de guidage (161) par le premier galet de guidage (868) contre la force de gravité et est guidée latéralement perpendiculairement au sens de déplacement,
   • la paroi latérale (112, 113) coulissante est pré-tendue par le second galet de guidage (869) basculant en direction du second rail de guidage (162) et présente ainsi un couple (M) dirigé vers le sol (115, 315), lequel couple (M) est soutenu par l'arrête d'extrémité (133, 134) tournée vers la paroi latérale (112, 113).

6. Dispositif de paravent (110, 210) selon l'une des revendications 1 à 5, **caractérisé en ce que**, sur une arête d'extrémité de revêtement (611), tournée vers la paroi frontale (114), du revêtement comme moyen de support

   • un support (685) avec à chaque fois deux rainures (683, 684) s'étendant parallèlement à l'arête d'extrémité de revêtement (611) est disposé sur les deux extrémités de l'arête d'extrémité de revêtement (611),
   • sur chacun des angles, tournés vers l'arête d'extrémité de revêtement (611), de la paroi frontale (114) est disposée une pièce de boulon (680) présentant à chaque fois deux boulons (681, 682) s'étendant parallèlement à l'arête d'extrémité de revêtement frontale (611),
   • la première rainure (683) présente un point de guidage de boulon (686) et la seconde rainure (684) présente un flanc de guidage de boulon (687),
   • lorsque le dispositif de paravent (110, 210) est dans l'état de service, le point de guidage de boulon (686) est dirigé sensiblement verticalement et le premier boulon (681) s'appuie sur celui-ci et le second boulon (682) repose sur le flanc de guidage de boulon (687),
   l'angle de flanc de guidage de boulon ($\chi$) du flanc de guidage de boulon (687) étant choisi par rapport à la verticale de telle sorte

      o que la paroi frontale (114) est soutenue contre la force de gravité et
      o que la paroi frontale (114) présente du fait de son propre poids et en coopération avec le point de guidage de boulon (686) comme point sans palier de basculement un couple (M) dirigé vers le sol (115, 315), lequel couple (M) est soutenu par l'arête d'extrémité (135) tournée vers la paroi frontale (114).

7. Dispositif de paravent (110, 210) selon l'une des revendications 1 à 6, **caractérisé en ce que** la au moins une paroi latérale (112, 113) et/ou une paroi frontale (114) est reliée de façon amovible au revêtement (111, 311).

8. Dispositif de paravent (110, 210) selon l'une des revendications 1 à 7, **caractérisé en ce qu'**au moins un dispositif de verrouillage est disposé dans la pièce de guidage (127, 827), lequel dispositif comprend partiellement au moins l'un des rails de guidage (161, 162) lorsque le dispositif de paravent (110, 210) est dans l'état de service, de sorte que la pièce de guidage (127, 827) ne peut être séparée des rails de guidage (161, 162) que lorsque le dispositif de verrouillage est actionné.

9. Dispositif de paravent (110, 210) selon l'une des revendications 1 à 8, **caractérisé en ce qu'**une baguette de glissement d'étanchéité (251, 252, 253), brosse d'étanchéité ou cylindre d'étanchéité (351), s'étendant au moins sur la longueur de l'arête d'extrémité (133, 134, 135, 136) est disposée sur au moins une arête d'extrémité (133, 134, 135, 136) du sol (115, 315).

10. Dispositif de paravent (110, 210) selon l'une des revendications 1 à 9, **caractérisé en ce que** le revêtement (111, 311) et au moins l'une des deux parois latérales (112, 113) et/ou la paroi frontale (114) et/ou la paroi arrière (116) peuvent coulisser verticalement par rapport au sol (115, 315) au moyen de deux guides verticaux (784).

11. Dispositif de paravent (110, 210) selon la revendication 10, **caractérisé en ce qu'**au moins un entraînement (780) est présent pour le déplacement vertical du revêtement (111, 311).

12. Dispositif de paravent (110, 210) selon l'une des revendications 1 à 11, **caractérisé en ce qu'**au moins un entraînement (780) est présent pour le déplacement horizontal de la au moins une paroi latérale (112, 113).

13. Appareil de laboratoire (100, 200) avec un dispositif de paravent (110, 210) selon l'une des revendications 1 à 12, l'appareil de laboratoire (100, 200) étant en particulier une balance, un appareil de dosage ou un dispositif de pipetage.

# Figur 1

# Figur 2

# Figur 3

# Figur 4

# Figur 5

361

362

127

112     161   162

# Figur 6

686

687

111

χ

683

685

684

681

682

680

113

611

114

# Figur 7

# Figur 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4700793 A
- EP 1617191 A1
- US 6686545 B2